**Europäisches Patentamt**

**European Patent Office**

**Office européen des brevets**

(19)

(11) Veröffentlichungsnummer: **0 265 551**
**B1**

(12)

# EUROPÄISCHE PATENTSCHRIFT

(45) Veröffentlichungstag der Patentschrift:
21.02.90

(21) Anmeldenummer: 86115134.8

(22) Anmeldetag: 31.10.86

(51) Int. Cl.⁴: **C01G 23/07**

(54) **Verfahren zur Herstellung grober scheuernder Titandioxidteilchenaggregate durch Dampfphasenoxidation von Titantetrachlorid und ihre Verwendung zur Verhinderung von Ansatzbildung beim gleichen Prozess.**

(43) Veröffentlichungstag der Anmeldung:
04.05.88 Patentblatt 88/18

(45) Bekanntmachung des Hinweises auf die Patenterteilung:
21.02.90 Patentblatt 90/8

(84) Benannte Vertragsstaaten:
BE DE FR GB IT NL

(56) Entgegenhaltungen:
GB-A- 866 363
US-A- 2 721 626
US-A- 2 828 187
US-A- 3 460 957

(73) Patentinhaber: KRONOS TITAN-Gesellschaft mbH,
Peschstrasse 5 Postfach 10 07 20,
D-5090 Leverkusen 1(DE)

(72) Erfinder: Hartmann, Achim, Dipl.-Ing.,
Lucas-Cranach-Strasse 18, D-5024 Pulheim(DE)
Erfinder: Thumm, Hans, Dr., Dresdener Strasse 9,
D-5090 Leverkusen 1(DE)

## Beschreibung

Die Erfindung betrifft ein Verfahren zur Herstellung grober scheuernder Titandioxidteilchenaggregate durch Dampfphasenoxidation von Titantetrachlorid und ihre Verwendung zur Verhinderung von Ansatzbildung beim gleichen Prozeß.

Die Herstellung von Titandioxid durch Dampfphasenoxidation von Titantetrachlorid mit Sauerstoff oder einem sauerstoffhaltigen Gas hat gegenüber älteren Verfahren, bei denen titanhaltige Ausgangsrohrstoffe wie z. B. Erze und/oder Schlacken mit Mineralsäuren, vorzugsweise Schwefelsäure, aufgeschlossen werden, zunehmend an Bedeutung gewonnen, weil bei der Dampfphasenoxidation nur feste und gasförmige Reaktionsprodukte gebildet werden und daher keine verdünnten Abfallsäuren entstehen, deren Aufkonzentrierung zusätzliche Verfahrensstufen und erhöhte Betriebskosten bedingt.

Während der Verbrennung (Oxidation) des Titantetrachlorids herrschen im Oxidationsreaktor (1) Temperaturen von 1200 bis 2000 °C, was wesentlich davon abhängt, ob als Oxidationsmittel Luft, Sauerstoff oder ein Gemisch aus beiden verwendet wird und ob bei der Oxidation zusätzliche Energie, z. B. in Gestalt einer Hilfsflamme, zugeführt wird. Der aus dem Oxidationsreaktor (1) austretende Strom heißer Reaktionsprodukte, im weiteren Text als "Reaktionsmischung" bezeichnet, enthält Titandioxid, das in sehr fein verteilter Form in gasförmigen Bestandteilen suspendiert ist.

Die frisch gebildeten $TiO_2$-Teilchen liegen zunächst als sehr reaktionsfächige Einzelteilchen vor, die während ihrer Verweilzeit in der heißen Reaktionszone größtenteils zu kleinen Teilchenaggregaten zusammenwachsen, deren Korngröße unter 0,15 mm liegt. Die Einzelteilchen und die kleinen Teilchenaggregate sind für die Herstellung von Titandioxidpigment verwendbar.

Ein Teil der kleinen Teilchenaggregate verwächst jedoch weiter unter teilweiser Versinterung zu größeren, harten, unförmigen Teilchenaggregaten, deren Korngröße über 0,15 mm liegt. Sie bilden sich bevorzugt in einer Schicht, die durch Ablagerung von $TiO_2$ auf den Flächen in der heißen Reaktionszone des Oxidationsreaktors (1) entsteht. Diese Schicht unterliegt einer stetigen abradierenden Einwirkung durch die über sie hinwegströmenden heißen Reaktionsprodukte und regeneriert sich andererseits durch Ablagerung neuer $TiO_2$-Teilchen ständig von selbst. Bei diesem Austauschvorgang werden in unterschiedlichen Zeitabständen unkontrolliert größere Partien der Schicht von den heißen Flächen losgerissen, gelangen so unerwünscht in die Reaktionsmischung und werden mit ihr fortgeführt. Diese großen, groben, $TiO_2$-Teilchenaggregate sind ohne vorherige Zerkleinerung nicht für die Pigmentherstellung geeignet, weil sie wegen ihrer Härte die Dispergierbarkeit des Pigmentes verschlechtern und wegen ihrer relativ breiten Korngrößenverteilung wesentliche optische Pigmenteigenschaften wie Aufhell- und Deckvermögen verschlechtern würden. Die Bildung solcher großen $TiO_2$-Teilchenaggregate läßt sich bei der Dampfphasenoxidation von Titantetrachlorid allenfalls vermindern aber nicht völlig vermeiden.

In der Dampfphase hergestelltes Titandioxid zeigt, insbesondere wenn es in Form von Einzelteilchen oder kleinen Teilchenaggregaten vorliegt, im Bereich zwischen der Austrittstemperatur aus dem Oxidationsreaktor (1) bis hinunter zur Temperatur von etwa 350 °C eine starke Tendenz, sich an Kühlflächen, insbesondere den Innenwandungen des Wärmeaustauschers (7) in zähen, festhaftenden Schichten anzusetzen, die keine Neigung zeigen, sich von selbst abzulösen.

Als nachteilige Folge dieser Ansatzbildung fällt der Wärmedurchgang durch die Rohrwände und damit die Kühlleistung des Wärmeaustauschers (7) ab.

Zur Vermeidung der Ansatzbildung setzt man der Reaktionsmischung an einer geeigneten Stelle, z. B. stromabwärts des Oxidationsreaktors (1), chemisch inerte, d. h. gegen die heißen chlorhaltigen Reaktionsgase beständige, grobe scheuernde Feststoffteilchen geeigneter Form und Korngröße zu, deren Aufgabe darin besteht, in möglichst geringer Zusatzmenge, bezogen auf das bei der Dampfphasenoxidation gebildete $TiO_2$, die Innenwände des Wärmeaustauschers (7) ständig von Ansatzbildung freizuhalten ohne dabei nennenswerten Materialabrieb (Abrasion) zu verursachen, insbesondere an solchen Innenflächen der Kühlvorrichtung, die gegen die Strömungsrichtung der Reaktionsprodukte geneigt sind. Die groben scheuernden Feststoffteilchen müssen einfach und preisgünstig herstellbar sein.

Da sie vorzugsweise mit Raumtemperatur in die Reaktionsmischung eingeführt werden, kommt ihnen zusätzlich eine Kühlwirkung zu.

Man hat zahlreiche Stoffe als Ausgansmaterial für grobe scheuernde Feststoffteilchen verwendet, z. B. Sand, Aluminiumoxid, Zirkoniumsilikat, anorganische Salze usw.

Es ist verständlich, daß diese Fremdstoffe zu einer Verunreinigung des Titandioxids führen und durch geeignete Maßnahmen wie Abtrennen in Absetzkammern oder Zyklonen oder Herauslösen mit Wasser wieder entfernt werden müssen. Um diese Nachteile zu vermeiden, hat man Verfahren entwickelt, bei denen scheuernde Feststoffteilchen aus Titandioxid zur Freihaltung der Wärmeaustauschflächen von Ansatzbildung verwendet werden. Dieses $TiO_2$ kann nach dem Verfahren des Säureaufschlusses titanhaltiger Rohrstoffe hergestellt sein, vorteilhafter ist es aber, solches Titandioxid zu verwenden, das bei der Dampfphasenoxidation von Titantetrachlorid entsteht.

Nach dem Verfahren der DE-A-14 42 758 kann die Oxidation des Titantetrachlorids in einer Reaktionskammer oder in einem Wirbelbettreaktor erfolgen. Im ersteren Falle werden die Reaktionspartner getrennt eingesetzt und die groben scheuernden $TiO_2$-Teilchen, suspendiert in Strömen der Reaktionspartner bzw. inerter Trägergase, so in den Oxidationsreaktor eingeführt, daß sie auf Flächenteilen, die den Reaktionspartnern bzw. ihren Umsetzungsprodukten zugänglich sind, auftreffen und dort die Bildung von Ansätzen vermindern.

Bei Anwendung eines Wirbelbettreaktors kann aus diesem Titandioxid entnommen und nach Abtrennung, Kühlung und gegebenenfalls einer Teilchenzerkleinerung als scheuerndes Feststoffmaterial in die Reaktionsmischung rückgeführt werden.

Bei Einführung der scheuernden Feststoffteilchen in der Oxidationsreaktor kann zwar dessen Innenwand weitgehend von Ansätzen freigehalten werden, das Verfahren ist aber energetisch ungünstig, weil ein Teil der zur Aufheizung der Reaktionspartner aufgewandten Energie zum Erwärmen der scheuernden Feststoffteilchen verbraucht wird. Ferner schlägt sich ein Teil des frisch gebildeten Titandioxids auf den durch den Oxidationsreaktor hindurchfliegenden scheuernden Festoffteilchen nieder und führt zu einer unerwünschten Teilchenvergrößerung, so daß es nicht möglich ist, dem Strom der Reaktionsprodukte Teilchen einer bestimmten gewünschten Kornfraktion zu entnehmen, sondern die grobe Kornfraktion muß erst einer Mahlung oder anderweitigen Zerkleinerung (z. B. oberflächlichem Teilchenabbau durch Chlorierung) unterworfen werden.

Verfahren, bei denen scheuernde $TiO_2$-Teichen in den Oxidationsreaktor eingeführt werden, haben sich daher in der Praxis nicht durchgesetzt.

Beim Verfahren der US-A 2.899.278 wird durch Dampfphasenoxidation von Titantetrachlorid erzeugtes Titandioxid zum Pigment aufgearbeitet und hierbei den üblichen Verfarhensstufen: Kühlen, Abtrennung von den gasförmigen Reaktionsprodukten, Calcinieren und Mahlen unterworfen. Der bei der intensiven Mahlung (z. B. Strahlmahlung) zunächst unverwendbar anfallende $TiO_2$-Feinstaub wird zu groben scheuernden Feststoffteilchen aufgearbeitet, die in die Reaktionsmischung rückgeführt werden.

Bei diesem Verfahren werden außer den unter 0,15 mm großen, zum Pigment verarbeitbaren, auch die über 0,15 mm großen, groben, versinterten $TiO_2$-Teilchenaggregate den genannten Verfahrensstufen unterworfen, wodurch die Kapazität der Anlage mit Material belastet wird, das nicht direkt zum Pigment verarbeitbar ist und die Gesamtausbeute des $TiO_2$-Herstellungsverfahrens vermindert wird.

Nach dem Verfahren der US-A-2.721.626, von dem die vorliegende Anmeldung ausgeht, werden grobe scheuernde Feststoffteilchen im Korngrößenbereich von 0,15 bis 6,35 mm, z. B. aggregierte Titandioxidteilchen, der heißen Reaktionsmischung zugesetzt und nach Abkühlung in einer geeigneten Trennvorrichtung in der Gasphase von den Reaktionsprodukten abgetrennt und erneut als scheuernde Feststoffteilchen eingesetzt. Die Trennung der groben, scheuernden Titandioxidaggregate mit Korngrößen über 0,15 mm vom feinteiligen Titandioxid ist in den dafür zur Verfügung stehenden Vorrichtungen wie Zyklonen, Absetzkammern, Sichtern usw. technisch nicht befreidigend, d. h. nicht mit ausreichender Trennwirkung, durchführbar, was dazu führt, daß die in den Wärmeaustauscher als scheuernde Feststoffteilchen rückgeführten groben $TiO_2$-Teilchenaggregate stets einen Anteil an feinteiligem Titandioxid enthalten, dessen Menge im $TiO_2$-Kreislauf infolge der ständigen teilweisen Abrasion grober $TiO_2$-Teilchenaggregate im Wärmeaustauscher in unerwünschter Weise ständig zunimmt, wodurch sich die Trennwirkung der Vorrichtung weiter verschlechtert. Eine Steuerung der Korngrößenverteilung durch entsprechend höhere Erzeugung grober $TiO_2$-Teilchenaggregate ist nicht möglich, da die Korngrößenverteilung der aus dem Oxidationsreaktor austretenden $TiO_2$-Teilchenaggregate im wesentlichen durch die Reaktionsbedingungen im Oxidationsreaktor festgelegt ist. Zur Gewinnung der groben scheuernden $TiO_2$-Teilchenaggregate wird bei diesem Verfahren das durch Filtration abgeschiedene feinteilige Titandioxid bei 600-1000 °C calciniert. Der dabei in grobkörnige Aggregate übergehende Teil des feinteiligen Titandioxids geht für die unmittelbare Pigmentherstellung verloren, wodurch die Gesamtausbeute des Verfahrens vermindert wird.

Es bestand daher die Aufgabe, ein verbessertes Verfahren zur Herstellung grober scheuernder Titandioxidteilchenaggregate in möglichst hoher Ausbeute im Rahmen der Dampfphasenoxidation von Titantetrachlorid zu entwickeln, wobei die heiße Reaktionsmichung gekühlt und das Titandioxid von den gasförmigen Reaktionsprodukten abgetrennt wird und die groben Titandioxidteilchenaggregate vom feinteiligen Titandioxid getrennt, gewonnen und als scheuernde Feststoffteilchen beim gleichen Verfahren wiederverwendet werden.

Die Aufgabe wird erfindungsgemäß gelöst durch Entwicklung eines Verfahrens zur Herstellung grober scheuernder Titandioxidteilchenaggregate durch Dampfphasenoxidation von Titantetrachlorid mit einem sauerstoffhaltigen Gas, wobei der heißen Reaktionsmischung grobe scheuernde Titandioxidteilchenaggregate zugefügt werden, die Reaktionsmischung indirekt gekühlt wird, das Titandioxid von den gasförmigen Reaktionsprodukten abgetrennt wird, die groben Titandioxidteilchenaggregate vom feinteiligen Titandioxid getrennt, gewonnen und als scheuernde Feststoffteilchen in die heiße Reaktionsmischung rückgeführt werden, wobei

a) der heißen Reaktionsmischung grobe scheuernde Titandioxidteilchenaggregate zugesetzt werden

b) die heiße Reaktionsmischung auf 350 bis 500°C indirekt abgekühlt wird

c) das Titandioxid von den gasförmigen Reaktionsprodukten abgetrennt wird

d) das abgetrennte Titandioxid in eine wässerige Suspension überführt wird

e) die in der wässerigen Suspension vorhandenen groben Titandioxidteilchenaggregate mit Korngrößen über 0,15 mm vom feinteiligen Titandioxid abgetrennt werden

f) die Abtrennung der groben Titandioxidteilchenaggregate mit Korngrößen über 0,15 mm auf einem bewegten Sieb erfolgt

g) der Rückstand des bewegten Siebes mit einer wässerigen Lösung behandelt wird

h) der mit der wässerigen Lösung behandelte Rückstand des bewegten Siebes mit einer alkalischen Lösung behandelt wird

i) der mit der alkalischen Lösung behandelte Rückstand des bewegten Siebes calciniert wird

k) das calcinierte Material als grobe scheuernde Titandioxidteilchenaggregate in die heiße Reaktionsmischung rückgeführt wird.

Die groben scheuernden Titandioxidteilchenaggregate werden der heißen Reaktionsmischung stromabwärts des Oxidationsreaktors (1) zugesetzt. Die Abkühlung der Reaktionsmischung auf 350 bis 500 °C, vorzugsweise auf 400 °C, erfolgt in einem Wärmeaustauscher (7), z. B. gemäß DE-C-32 05 213. Die aus dem Wärmeaustauscher (7) austretende abgekühlte Reaktionsmischung wird in eine geeignete Trennvorrichtung geführt, z. B. eine Filteranlage (9), wo das Titandioxid von den gasförmigen Reaktionsprodukten abgetrennt wird.

Das Titandioxid enthält an seiner Oberfläche noch eine geringe Menge von adsorbiertem Chlor, die vor Weiterverarbeitung des $TiO_2$ möglichst quantitativ entfernt werden muß, weil sonst eine aufwendige Reinigung der aus dem Calcinierofen (20) austretenden Gase erforderlich wäre.

Hierzu wird das abgetrennte Titandioxid über eine Regelvorrichtung, z. B. eine Zellradschleuse (nicht mitgezeichnet), in einen Anteigebehälter (11) überführt und dort durch Zugabe von Wasser in eine pumpfähige Suspension verwandelt, die etwa 600 g $TiO_2$/l (berechnet als wasserfreies $TiO_2$) enthält. Die Konzentration dieser Suspension wird durch Zugabe von Wasser annähernd konstant gehalten. Die Abtrennung der groben Titandioxidteilchenaggregate mit Korngrößen über 0,15 mm vom feinteiligen Titandioxid mit Korngrößen unter 0,15 mm aus der wässerigen Suspension erweist sich als schwierig: Ein einfaches Absieben ist nicht möglich, da bei Verwendung ruhender Siebe eine ständige Verstopfung der Siebmaschen erfolgt. Dagegen gelingt die Abtrennung auf einem bewegten Sieb, bevorzugt auf einem Schwingsieb (14).

Die Anwendung eines Schwingsiebes (14) mit einer Maschenweite von 0,15 mm, das unter einem Neigungswinkel von 20 bis 30 ° gegen die Horizontale angebracht ist, ermöglicht eine quantitative Abtrennung des feinteiligen Titandioxidanteils von den groben Titandioxidteilchenaggregaten, deren Anteil ca. 10 bis 20 Gew. % der gesamten Titandioxidmenge beträgt und sich danach richtet, welche Menge grober Feststoffteilchen zur Erzielung einer ausreichenden Scheuerwirkung im Wärmeaustauscher (7) erforderlich ist.

Nachteilig ist, daß sich der feuchte Siebrückstand infolge eines durch die Siebschwingungen ausgelösten Rollvorganges zu kugelförmigen Gebilden mit Durchmessern im Bereich bis ca. 40 mm zusammenballt, die beim üblichen Besprühen mit Wasser, z. B. aus Vollkegeldüsen, ihre Größe und Form im wesentlichen beibehalten, weshalb das darin absorbierte Chlor nicht im gewünschten Maße ausgewaschen werden kann.

Es gelingt aber, durch Anwendung von Wasserstrahlen erhöhter Durchschlagskraft, wie sie mit Flachstrahldüsen über Leitung (15) erzeugt weden können, die kugelförmigen Gebilde des Siebrückstandes aufzubrechen und dadurch die Auswaschung des Chlors wesentlich zu verbessern. Dieser "Aufbrecheffekt" ist am größten, wenn die Flachstrahldüsen in einer Reihe nebeneinander angeordnet sind und der Winkel zwischen den Achsen der Düsenstrahlen und der Sieboberfläche 40 bis 50 °, vorzugsweise 45 ° beträgt.

Bei einer solchen Anbringung der Flachstrahldüsen gelingt es, mit einer Menge von nur 20 Gew. % Wasser, bezogen auf das auszuwaschende Titandioxid (berechnet als wasserfreies $TiO_2$), 50 Gew. % des Anfangsgehaltes an Chlor aus dem feuchten Filterrückstand des Schwingsiebes (14) auszuwaschen und so eine Belastung der zum Pigment aufzuarbeitenden Suspension aus feinteiligem Titandioxid im Korngrößenbereich unter 0,15 mm mit größeren Flüssigkeitsmengen zu vermeiden. Der Chlorgehalt des feuchten Siebrückstandes des Schwingsiebes (14) beträgt nach dem Auswaschen mit Wasser 0,03 - 0,06 Gew. % Chlor (bez. auf wasserfreies $TiO_2$.

Der kontinuierlich vom Schwingsieb (14) abfallende gewaschene Siebrückstand aus feuchtem Titandioxid wird mit einer geeigneten Fördervorrichtung,z. B. einer Förderschnecke (18), in eine rotierende Calciniervorrichtung, z. B. einen Drehrohrofen (20), überführt und bei einer Temperatur von 700 bis 1000 °C calciniert. Während der Calcinierung tritt eine Vergrößerung und Vergröberung der Titandioxidteilchenaggregate ein, es kommt zu Ansatzbildung und zur Bildung von Klumpen, die bis ca 50 mm groß werden und schließlich zur Verstopfung des Drehrohrofens (20) führen können. Zu grobkörnige Produkte zeigen eine verminderte Scheuerwirkung, weil letztere im wesentlichen durch die Anzahl der pro Zeiteinheit auf die freizuhaltende Fläche auftreffenden Teilchen bestimmt wird, wobei zu grobe Teilchen zu wenige "Treffer" erzielen. Andererseits ist auch ein allzu feinteiliges, mehlartiges, Material ungeeignet, weil es keine Scheuerwirkung aufweist.

Man kann eine Siebfraktion dieses Materials im Korngrößenbereich von 0,2 bis 4 mm, wie es z.B. nach 24 stündiger Calcinierung erhältlich ist, als Material für grobe Scheuerteilchen in die Reaktionsmischung rückführen. Der Verlust an groben scheuernden Titandioxidteilchenaggregaten durch Abrieb im Wärmeaustauscher (7) muß ergänzt werden, was z.B. dadurch erfolgen kann, daß der mit der wässerigen Lösung behandelte Siebrückstand vor der Calcinierung mit einer bestimmten Menge einer wässerigen Titandioxidsuspension vermischt wird, deren Konzentration beispielsweise 600 g $TiO_2$/l beträgt.

Die Mischung enthält 70 bis 90 Gew.% $TiO_2$ aus dem Siebrückstand und 30 bis 10 Gew.% $TiO_2$ aus der Suspension (beide Angaben beziehen sich auf wasserfreies $TiO_2$).

Überraschend wurde gefunden, daß sich die unerwünschte Materialvergröberung und Klumpenbildung des Titandioxids verhindern lassen, wenn der Siebrückstand vor der Calcinierung mit einer alkalischen Lösung behandelt wird, deren Alkaligehalt 0,01 bis 0,20 Gew.% NaOH entspricht (bezogen auf wasserfreies $TiO_2$).

Die Materialvergröberung unterbleibt auch, wenn der Siebrückstand vor der Calcinierung mit einer alkalischen Lösung behandelt wird, deren Alkaligehalt 0,01 bis 0,30 Gew.% KOH beträgt (bezogen auf wasserfreies $TiO_2$).

Der Siebrückstand kann vor der Calcinierung auch mit mindestens einer Verbindung behandelt werden, die infolge hydrolytischer Spaltung oder bei erhöhter Temperatur Alkali abspaltet. Z.B. kann es sich um Lösungen von Alkalisalzen anorganischer oder organischer ein- oder mehrbasiger Säuren handeln.

Es ist aus der US-A 3 460 957 ein Verfahren bekannt, bei dem grobteiliges Titandioxid, das durch Dampfphasenoxidation von Titantetrachlorid entstanden ist, in einer wässerig-alkalischen Suspension einer Siebung mit einem Schwingsieb unterworfen wird. Hierbei erfolgt die Abtrennung der Grobteilchen bei einer Teilchengröße von 0,09 mm. Die Alkalizugabe erfolgt vor der Siebung, und eine Härtung der abgetrennten Grobteilchen durch eine Calcinierbehandlung und ihr Einsatz als scheuernde Feststoffteilchen bei der Kühlung der Reaktionsmischung ist nicht vorgesehen.

Bei Zusätzen von 0,01 bis 0,30 Gew.% Alkalihydroxid (bezogen auf wasserfreies $TiO_2$) und Calciniertemperaturen von 700–1000°C lassen sich grobe, harte Titandioxidteilchenaggregate im Korngrößenbereich von 0,15 bis über 4 mm, vorzugsweise von 0,1 bis 2 mm,herstellen, die als grobe scheuernde Feststoffteilchen in den Wärmeaustauscher rückgeführt werden können. Ihre Härte reicht aus, um Ansatzbildung im Wärmeaustauscher (7) sicher zu verhindern. Sie werden bei der Berührung mit den Kühlflächen teilweise zu feineren Teilchen zerrieben ohne aber, auch im Dauerbetrieb, an den Kühlflächen selbst nennenswerte Abrasion zu bewirken. Setzt man dem Calciniergut weniger als 0,01 Gew. % Alkalihydroxid zu, so tritt eine allmähliche Teilchenvergröberung bei der Calcinierung ein. Größere Mengen als 0,2 bzw. 0,3 Gew. % Alkalihydroxid bewirken eine nennenswerte Reaktion mit dem zumeist silikatischen Ofenauskleidungsmaterial, ferner tritt ein merklicher Verlust an Titandioxid infolge Bildung von Alkalititanat ein.

Überraschend führt der Zusatz von 0,01 bis 0,03 Gew. % Alkalihydroxid zum Titandioxid vor der Calcinierung zu einer vorteilhaften, bevorzugten Ausführungsform des Verfahrens, das so durchgeführt werden kann, daß durch Abrasion im Wärmeaustauscher (7) eine ebenso große Menge grober scheuernder Titandioxidteilchenaggregate im Korngrößenbereich über 0,15 mm verbraucht wird wie in der heißen Reaktionszone durch Versinterung im gleichen Zeitraum neu entsteht.

Damit bleibt der im $TiO_2$-Kreislauf befindliche Anteil an groben Titandioxidteilchenaggregaten im Korngrößenbereich über 0,15 mm konstant. Eine Ergänzung oder Entnahme von außen entfällt, wodurch das Verfahren stark vereinfacht wird, so daß es zu seiner Wartung lediglich einer gelegentlichen Kontrolle des Anteils der über 1,5 mm großen Teilchenaggregate in dem von den gasförmigen Reaktionsprodukten abgetrennten Titandioxid bedarf.

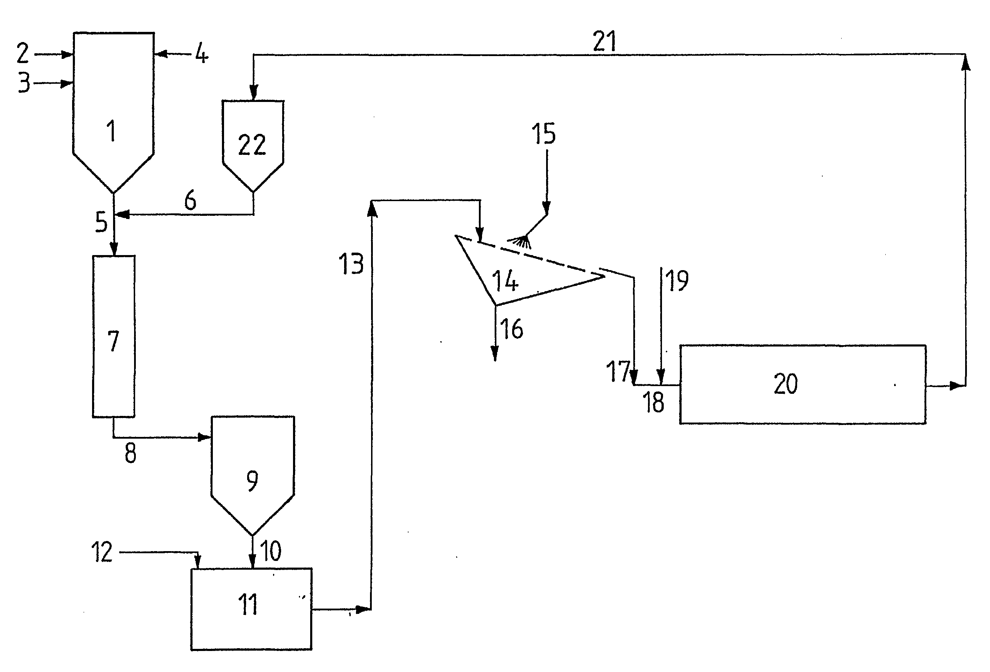

Die nach dem erfindungsgemäßen Verfahren hergestellten groben Titandioxidteilchenaggregate finden Verwendung als scheuernde Feststoffteilchen zur Verhinderung von Ansatzbildung bei der Titandioxidherstellung durch Dampfphasenoxidation von Titantetrachlorid, während das feinteilige Titandioxid in üblicher Weise zum Pigment weiterverarbeitet wird. Das Verfahren wird durch die Beispiele 1 bis 3 und die beigefügte Zeichnung näher erläutert.

Beispiel 1 (Vergleichsbeispiel)

In den Oxidationsraktor (1) wird durch Leitung (2) Titantetrachlorid, durch Leitung (3) gegf. ein Brennstoff und durch Leitung (4) Luft zugeführt. In die bei der Dampfphasenoxidation des Titantetrachlorids entstehende heiße Reaktionsmischung werden im Übergangsteil (5) über Leitung (6) grobe scheuernde Titandioxidteilchenaggregate im Korngrößenbereich von 0,2 bis 2 mm eingeführt. Die Reaktionsmischung wird im Wärmeaustauscher (7) auf 400 °C abgekühlt und enthält nach Verlassen des Wärmeaustauschers insgesamt 30,0 Gew. % $TiO_2$, davon 3,9 Gew. % in Form groben Teilchenaggregate im Korngrößenbereich über 0,15 mm. Die Reaktionsmischung wird durch Leitung (8) der Filteranlage (9) zugeführt, worin das Titandioxid von den gasförmigen Reaktionsprodukten abgetrennt und durch Leitung (10) in den Anteigebehälter (11) befördert wird, in den über Leitung (12) soviel Wasser eingeleitet wird, daß eine wässerige $TiO_2$-Suspension entsteht, deren Konzentration etwa 600 g $TiO_2$/l beträgt und die durch ständige Zufuhr von Wasser konstant gehalten wird.

Die Supension wird durch Leitung (13) auf das Schwingsieb (14) befördert, dessen Maschenweite 0,15 mm beträgt und das in einem Neigungswinkel von 30 ° gegen die Horizontale angebracht ist und elektromechanisch in Schwingungen einer Frequenz von 1500/sec versetzt wird. Während des Siebens bilden sich auf der Sieboberfläche kugelartige Zusammenballungen aus feuchten groben Titandioxidteilchenaggregaten des Korngrößenbereiches über 0,15 mm, die Größen von 10 bis 40 mm erreichen können. Sie werden durch Wasserstrahlen zerkleinert, die über Leitung (15) aus Flachstrahldüsen mit Bohrungen von 1 mm Durchmesser austreten. Diese Düsen sind im Abstand von 130 mm in einer Reihe nebeneinander so angeordnet, daß die Düsenstrahlachsen zur Sieboberfläche einen Winkel von 45 ° und einen Sprühwinkel von 120 ° bilden. Der Chlorgehalt der zerkleinerten kugelförmigen Gebilde beträgt nach dem Auswaschen 0,04 Gew. % Cl (bez. auf wasserfreies $TiO_2$). Die feinteilige Siebfraktion wird über Leitung (16) abgezogen und der Aufarbeitung zum Pigment zugeführt. 1070 kg/std des feuchten Siebrückstandes, entsprechend 750 kg/std wasserfreiem $TiO_2$,werden über Leitung (17) und Förderschnecke (18) in den Drehrohrofen (2) befördert und bei 950 °C calciniert. Danach werden die groben Titandioxidteilchenaggregate über Leitung (21), den Sammelbehälter (22) und Leitung (6) in den Übergangsteil (5) rückgeführt.

Tabelle 1 zeigt die prozentualen Anteilen der einzelnen Siebfraktionen des Ofenauslaufs in Abhängigkeit von der Versuchsdauer

### Tabelle 1

| Teilchengröße in mm | Siebfraktionen des Ofenauslaufs in Gew.% Versuchsdauer (std.) | | | | | |
|---|---|---|---|---|---|---|
| | 24 | 48 | 72 | 96 | 120 | 144 |
| über 4 | 3,1 | 8,2 | 16,7 | 22,2 | 35,8 | 60,4 |
| " 2 | 10,3 | 15,5 | 25,2 | 32,7 | 33,0 | 37,0 |
| " 1 | 14,2 | 11,0 | 12,0 | 10,0 | 15,1 | 2,6 |
| " 0,8 | 21,0 | 19,0 | 16,1 | 15,2 | 10,2 | 0,0 |
| " 0,5 | 38,1 | 34,9 | 15,7 | 12,1 | 5,9 | 0,0 |
| " 0,2 | 13,2 | 11,3 | 14,2 | 7,8 | 0,0 | 0,0 |
| unter 0,2 | 0,1 | 0,1 | 0,1 | 0,0 | 0,0 | 0,0 |

Tabelle 1 zeigt, daß während 144 stündiger Versuchsdauer eine starke Kornvergrößerung eintritt. Die Fraktionen der über 4 mm und über 2 mm großen Titandioxidteilchenaggregate nehmen zu, die der kleineren Teilchen dagegen ab bzw. verschwinden ganz. Im vorliegenden Beispiel mußte der Versuch nach 160 std. abgebrochen werden, nachdem der Ofenauslauf mehrere cm große Klumpen aufwies.

Beispiel 2

Die Verfahrensbedingungen sind die gleichen wie in Beispiel 1 mit dem Unterschied, daß dem Calciniergut vor Eingabe in den Drehrohrofen (20) aus Leitung (19) über Förderschnecke (18) 0,02 Gew. % NaOH (bezogen auf wasserfreies Titandioxid) in Form einer 10 Gew. %igen Natronlauge zugemischt werden.

Das Ergebnis der Siebanalyse des Ofenauslaufs ist Tabelle 2 zu entnehmen.

Tabelle 2

| Teilchengröße in mm | Siebfraktionen des Ofenauslaufs in Gew. % Versuchsdauer (std.) | | | | | | |
|---|---|---|---|---|---|---|---|
| | 24 | 48 | 72 | 96 | 120 | 144 | 5000 |
| über 4 | 0,4 | 0,8 | 0,0 | 0,4 | 0,5 | 0,3 | 0,5 |
| " 2 | 3,0 | 3,2 | 2,1 | 4,7 | 4,5 | 2,6 | 4,1 |
| " 1 | 7,9 | 12,1 | 10,9 | 23,1 | 14,0 | 13,1 | 12,2 |
| " 0,8 | 9,0 | 11,6 | 11,6 | 16,3 | 11,4 | 12,2 | 13,1 |
| " 0,5 | 41,0 | 41,0 | 44,2 | 37,5 | 40,7 | 42,2 | 34,7 |
| " 0,2 | 37,8 | 30,2 | 30,2 | 17,4 | 27,9 | 29,1 | 34,6 |
| unter 0,2 | 0,8 | 1,1 | 1,0 | 0,6 | 1,0 | 0,5 | 0,8 |

Nach Tabelle 2 unterscheiden sich die Siebfraktionen nach 24 und 5000 std. Calcinierdauer relativ wenig. Der Ofenauslauf besteht nahezu vollständig aus Titandioxidteilchenaggregaten im Korngrößenbereich von 0,2 bis 2,0 mm, die als Material für grobe scheuernde Feststoffteilchen gut geeignet sind und in ihrer gesamten Menge in die heiße Reaktionsmischung rückgeführt werden.

Beispiel 3

Dieses Beispiel zeigt anhand der Tabelle 3 eine Übersicht der im Kreislauf geführten Titandioxidmenge

Tabelle 3

| Stelle der Probe- entnahme | Durchgesetzte $TiO_2$-Menge in kg/std. Korngrößenbereich | |
|---|---|---|
| | unter 0,15 mm | über 0,15 mm |
| zwischen Oxidationsreaktor (1) und Wärmeaustauscher (7) | | |
| vor Zugabe ⎱ der groben Titandioxid- | 4940 | 60 |
| nach Zugabe ⎰ teilchenaggregate | 4940 | 810 |
| nach Austritt aus dem Wärme- austauscher (7) | 5000 | 750 |

am Schwingsieb (14)

| | | |
|---|---|---|
| Feinfraktion (Weiterverarbeitung zu Pigment) | 5000 | 0 |
| Grobfraktion (Siebrückstand = grobe TiO$_2$-Teilchenaggregate, zur Calcinierung) | 0 | 750 |
| nach der Calcinierung (Rückführung in den Übergangsteil (5)) | 0 | 750 |

Aus diesem Beispiel ergibt sich folgende Bilanz der groben scheuernden Titandioxidteilchenaggregate im Korngrößenbereich über 0,15 mm:

750 kg/std. werden zur Verhinderung von Ansatzbildung auf den Wärmeaustauschflächen ständig im Kreislauf geführt.

60 kg/std. entstehen im Oxidationsreaktor (1), die gleiche Menge wird im Wärmeaustauscher (7) durch Abrasion zu Teilchen im Korngrößenbereich unter 0,15 mm zerrieben. Dem Kreislauf brauchen somit weder grobe scheuernde Titandioxidteilchenaggregate zugesetzt noch entzogen zu werden.

## Patentansprüche

1. Verfahren zur Herstellung grober scheuernder Titandioxidteilchenaggregate durch Dampfphasenoxidation von Titantetrachlorid mit einem sauerstoffhaltigen Gas, wobei der heißen Reaktionsmischung grobe scheuernde Titandioxidteilchenaggregate zugefügt werden, die Reaktionsmischung gekühlt wird, das Titandioxid von den gasförmigen Reaktionsprodukten abgetrennt wird, die groben Titandioxidteilchenaggregate vom feinteiligen Titandioxid getrennt und als scheuernde Feststoffteilchen in die heiße Reaktionsmischung rückgeführt werden, wobei

a) der heißen Reaktionsmischung grobe scheuernde Titandioxidteilchenaggregate mit Korngrößen über 0,15 mm zugesetzt werden

b) die heiße Reaktionsmischung auf 350 bis 500 °C indirekt abgekühlt wird

c) das Titandioxid von den gasförmigen Reaktionsprodukten abgetrennt wird

d) das abgetrennte Titandioxid in eine wässerige Suspension überführt wird

e) die in der wässerigen Suspension vorhandenen groben Titandioxidteilchenaggregate mit Korngrößen über 0,15 mm vom feinteiligen Titandioxid abgetrennt werden

f) die Abtrennung der groben Titandioxidaggregate mit Korngrößen über 0,15 mm auf einem bewegten Sieb erfolgt

g) der Rückstand des bewegten Siebes mit einer wässerigen Lösung behandelt wird

h) der mit der wässerigen Lösung behandelte Rückstand des bewegten Siebes mit einer alkalischen Lösung behandelt wird

i) der mit der alkalischen Lösung behandelte Rückstand des bewegten Siebes calciniert wird

k) das calcinierte Material als grobe scheuernde Titandioxidteilchenaggregate in die heiße Reaktionsmischung rückgeführt wird.

2. Verfahren nach Anspruch 1, dadurch gekennzeichnet, daß die Abtrennung der suspendierten groben Titandioxidteilchenaggregate mit Korngrößen über 0,15 mm vom feinteiligen Titandioxid auf einem Schwingsieb (14) erfolgt.

3. Verfahren nach Ansprüchen 1 und 2, dadurch gekennzeichnet, daß der Siebrückstand des bewegten Siebes mit Wasser aus Flachstrahldüsen besprüht wird, die in einer Reihe nebeneinander angeordnet sind, wobei der Winkel zwischen den Achsen der Düsenstrahlen und der Sieboberfläche 40 bis 50 °, vorzugsweise 45 ° beträgt.

4. Verfahren nach Ansprüchen 1 bis 3, dadurch gekennzeichnet, daß der Siebrückstand vor der Calcinierung mit einer wässerigen Titandioxidsuspension vermischt wird, wobei diese Mischung 70 bis 90 Gew. % TiO$_2$ aus dem Siebrückstand und 30 bis 10 Gew. % TiO$_2$ aus der Suspension enthält (beide Angaben beziehen sich auf wasserfreies TiO$_2$).

8

5. Verfahren nach Ansprüchen 1 bis 3, dadurch gekennzeichnet, daß der Siebrückstand vor der Calcinierung mit einer alkalischen Lösung behandelt wird, deren Alkaligehalt 0,01 bis 0,20 Gew. % NaOH entspricht (bezogen auf wasserfreies $TiO_2$).

6. Verfahren nach Ansprüchen 1 bis 3, dadurch gekennzeichnet, daß der Siebrückstand der Calcinierung mit einer alkalischen Lösung behandelt wird, deren Alkaligehalt 0,01 bis 0,30 Gew. % KOH beträgt (bezogen auf wasserfreies $TiO_2$).

7. Verfahren nach Anspruch 1 bis 6, dadurch gekennzeichnet, daß der Siebrückstand vor der Calcinierung mit mindestens einer Verbindung behandelt wird, die infolge hydrolytischer Spaltung oder bei erhöhter Temperatur Alkali abspaltet.

8. Verfahren nach Ansprüchen 1 bis 7, dadurch gekennzeichnet, daß grobe harte Titandioxidteilchenaggregate im Korngrößenbereich von 0,15 bis über 4 mm, vorzugsweise von 0,2 bis 2 mm, hergestellt und als grobe scheuernde Feststoffteilchen in die heiße Reaktionsmischung rückgeführt werden.

9. Verfahren nach Ansprüchen 1 bis 3 und 5 bis 8, dadurch gekennzeichnet, daß der im $TiO_2$-Kreislauf befindliche Anteil an groben Titandioxidteilchenaggregaten im Korngrößenbereich über 0,15 mm konstant bleibt.

10. Verwendung der nach Ansprüchen 1 bis 9 hergestellten groben Titandioxidteilchenaggregate als scheuernde Feststoffteilchen zur Verhinderung von Ansatzbildung bei der Titandioxidherstellung durch Dampfphasenoxidation von Titantetrachlorid.

## Claims

1. A process for the production of coarse scrubbing aggregates of titanium dioxide particles by vapour phase oxidation of titanium tetrachloride with an oxygen-containing gas, coarse $TiO_2$ scrubbing aggregates being commingled with the hot reaction mixture, the reaction mixture being cooled, the titanium dioxide being separated from the gaseous reaction products, the coarse titanium dioxide aggregates being separated from the $TiO_2$ fines, recovered and recycled as scrubbing solids in the hot reaction mixture, the process comprising:
   a) adding coarse scrubbing aggregates of $TiO_2$ particles of sizes above 0.15 mm to the hot reaction mixture;
   b) cooling the hot reaction mixture indirectly down to 350–500°C;
   c) separating the titanium dioxide from the gaseous reaction products;
   d) slurrying the separated titanium dioxide with water;
   e) separating the coarse titanium dioxide aggregates of sizes above 0.15 mm present in the aqueous slurry from the $TiO_2$ fines;
   f) using a moved screen to separate the coarse titanium dioxide aggregates of sizes above 0.15 mm;
   g) treating the residue of the moved screen with an aqueous solution;
   h) treating the moved screen residue treated with an aqueous solution, with an alkaline solution;
   i) calcining the moved screen residue treated with the alkaline solution;
   k) returning the calcined material in the form of coarse $TiO_2$ scrubbing aggregates to the hot reaction mixture.

2. A process of Claim 1, comprising use of a vibrating screen (14) to separate the suspended coarse $TiO_2$ aggregates of sizes above 0.15 mm from the titanium dioxide fines.

3. A process of Claims 1 and 2, comprising spraying the residue on the moved screen with water from a fan jet, the nozzles being arranged in one line side by side and the angle between the axes of the jets and the screen surface being 40–50°, preferably 45°.

4. A process of Claims 1 to 3, comprising mixing the screen residue prior to calcination with an aqueous titanium dioxide suspension, this mixture containing 70 to 90% by weight $TiO_2$ from the screen residue and 30 to 10% by weight $TiO_2$ from the suspension (both percentages refer to anhydrous $TiO_2$).

5. A process of Claims 1 to 3, comprising treating the screen residue prior to calcination with an alkaline solution whose alkali content corresponds to 0.01 to 0.20% by weight NaOH (related to anhydrous $TiO_2$).

6. A process of Claims 1 to 3, comprising treating the screen residue prior to calcination with an alkaline solution whose alkali content corresponds to 0.01 to 0.30% by weight KOH (related to anhydrous $TiO_2$).

7. A process of Claims 1 to 6, comprising treating the screen residue prior to calcination with at least one compound which splits off alkali due to hydrolytic cleavage or at elevated temperatures.

8. A process of Claims 1 to 7, comprising production of coarse hard aggregates of titanium dioxide particles of sizes ranging between 0.15 and over 4.0 mm, preferably between 0.2 and 2.0 mm and returning them as coarse scrub solids to the hot reaction mixture.

9. A process of Claims 1 to 3 and 5 to 8, comprising keeping the percentage of coarse titanium dioxide aggregates of sizes above 0.15 mm constant in $TiO_2$ recycling.

10. Use of the coarse aggregates of titanium dioxide particles produced in the process of Claims 1 to 9 as scrub solids to prevent the formation of deposits in the production of titanium dioxide by the vapour phase oxidation of titanium tetrachloride.

**Revendications**

1. Procédé pour préparer de grands agrégats grossiers de particules abrasives de bioxyde de titane, par oxydation du tétrachlorure de titane en phase vapeur à l'aide d'un gaz contenant de l'oxygène, dans lequel on introduit dans le mélange réactionnel chaud des agrégats de particules abrasives de bioxyde de titane grossiers, on refroidit le mélange réactionnel, on sépare le bioxyde de titane des produits gazeux de réaction, on sépare les agrégats grossiers de particules de bioxyde de titane d'avec le bioxyde de titane en fines particules et l'on recycle ces agrégats, à titre de particules solides abrasives, dans le mélange réactionnel chaud, procédé dans lequel

a) on ajoute au mélange réactionnel chaud des agrégats grossiers de particules abrasives de bioxyde de titane, ayant des grosseurs de grains supérieures à 0,15 mm,

b) on soumet le mélange réactionnel chaud à un refroidissement indirect jusqu'à 350 à 500°C,

c) on sépare le bioxyde de titane du produit gazeux de réaction,

d) on transfère le bioxyde de titane ainsi séparé pour obtenir une suspension aqueuse,

e) on sépare les agrégats grossiers de particules de bioxyde de titane, ayant des grosseurs de grains supérieures à 0,15 mm, présents dans la suspension aqueuse d'avec le bioxyde de titane en fines particules,

f) on effectue, sur un tamis soumis à agitation, la séparation des agrégats de particules grossiers de bioxyde de titane ayant des grosseurs de grains supérieures à 0,15 mm,

g) on traite, à l'aide d'une solution aqueuse, le résidu du tamis agité,

h) on traite par une solution alcaline le résidu, déjà traité par la solution aqueuse, du tamis agité,

i) on calcine le résidu, traité par la solution alcaline, du tamis agité,

k) on recycle vers le mélange réactionnel chaud la matière calcinée, sous forme de gros agrégats de particules abrasives de bioxyde de titane.

2. Procédé selon la revendication 1, caractérisé en ce que la séparation des grands agrégats des particules de bioxyde de titane en suspension, ayant des grosseurs de grains supérieures à 0,15 mm, d'avec le bioxyde de titane en fines particules a lieu sur un tamis oscillant (14).

3. Procédé selon les revendications 1 et 2, caractérisé en ce que le résidu du tamisage sur le tamis agité est aspergé par de l'eau provenant de buses à jets plats, qui sont disposées côte à côte en une rangée, l'angle formé entre les axes des jets des buses et la surface du tamis étant de 40 à 50°, avantageusement de 45°.

4. Procédé selon les revendications 1 à 3, caractérisé en ce que, avant la calcination, on mélange le résidu du tamisage avec une suspension aqueuse de bioxyde de titane, ce mélange contenant 70 à 90% en poids de $TiO_2$ provenant du résidu de tamisage et 30 à 10% en poids de $TiO_2$ provenant de la suspension (les deux pourcentages se rapportant à du $TiO_2$ anhydre).

5. Procédé selon les revendications 1 à 3, caractérisé en ce qu'on traite avant la calcination le résidu de tamisage par une solution alcaline, dont la teneur en matière alcaline correspond à 0,01 à 0,20% en poids de NaOH (sur la base de $TiO_2$ anhydre).

6. Procédé selon les revendications 1 à 3, caractérisé en ce qu'on traite, avant la calcination, le résidu du tamisage par une solution alcaline dont la teneur en matière alcaline est de 0,01 à 0,30% en poids de KOH (sur la base de $TiO_2$ anhydre).

7. Procédé selon les revendications 1 à 6, caractérisé en ce qu'on traite, avant la calcination, le résidu du tamisage par au moins un composé qui, par scission hydrolytique ou à température élevée, donne par scission une substance alcaline.

8. Procédé selon les revendications 1 à 7, caractérisé en ce qu'on prépare de grands agrégats de particules durs et grossiers de bioxyde de titane, ayant des grosseurs de grains de 0,15 à plus de 4 mm, avantageusement de 0,2 à 2 mm et on les recycle, à titre de grandes particules grossières abrasives solides, dans le mélange réactionnel chaud.

9. Procédé selon les revendications 1 à 3 et 5 à 8, caractérisé en ce que la proportion des grands agrégats de particules de bioxyde de titane ayant des grosseurs de particules supérieures à 0,15 mm, demeure constante dans le circuit du $TiO_2$.

10. Utilisation des grands agrégats de particules de bioxyde de titane, préparés selon les revendications 1 à 9, à titre de particules solides abrasives pour empêcher la formation d'incrustations lors de la préparation du bioxyde de titane par oxydation du chlorure de titane en phase vapeur.

.

10

EP 0 265 551 B1